Europäisches Patentamt

European Patent Office

Office européen des brevets

(19)

(11) Veröffentlichungsnummer: **0 201 913 B1**

# EUROPÄISCHE PATENTSCHRIFT

(45) Veröffentlichungstag der Patentschrift: **31.07.91**

(51) Int. Cl.⁵: **B60V 3/06**, B63B 1/12

(21) Anmeldenummer: **86106507.6**

(22) Anmeldetag: **13.05.86**

(54) **Mehrrumpf-Wasserfahrzeug.**

(30) Priorität: **17.05.85 DE 3517863**

(43) Veröffentlichungstag der Anmeldung:
**20.11.86 Patentblatt 86/47**

(45) Bekanntmachung des Hinweises auf die
Patenterteilung:
**31.07.91 Patentblatt 91/31**

(84) Benannte Vertragsstaaten:
**FR GB NL SE**

(56) Entgegenhaltungen:
**CH-A- 489 388**
**US-A- 3 507 241**
**US-A- 3 677 212**
**US-A- 3 835 802**

(73) Patentinhaber: **BLOHM + VOSS AG**
**Hermann-Blohm-Strasse 3**
**W-2000 Hamburg 11(DE)**

(72) Erfinder: **Schlichthorst, Norbert, Dipl.-Ing.**
**Osterberg 7**
**W-2150 Beckdorf(DE)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**W-8000 München 22(DE)**

## Beschreibung

Die Erfindung betrifft ein Mehrrumpf-Wasserfahrzeug nach dem Oberbegriff des Anspruches 1.

Aus der CH-A-489 388 ist ein Mehrrumpf-Wasserfahrzeug mit mindestens zwei sich in Fahrtrichtung erstreckenden, parallel zueinander mit Abstand angeordneten Schwimmern bekannt. Diese sind oben durch eine Verbindungsstruktur miteinander verbunden, die Einbauten und unten ein oberhalb der Wasserlinie gelegenes Querdeck aufweist, welches zusammen mit den Schwimmern einen Tunnel bildet.

In dem Querdeck ist wenigstens eine Öffnung vorgesehen, um mittels eines Aufzugs auf oder in dem Wasserfahrzeug gelagerte Lasten in den Tunnel ablassen oder von dort aufnehmen zu können. Der Aufzug enthält hierfür einen die Lasten aufnehmenden Rahmen, der durch die Öffnung im Querdeck bewegt werden kann. Der Tunnel ist so ausreichend dimensioniert, daß die Lasten darin manövriert werden können.

Bei derartigen Katamaran-Wasserfahrzeugen besteht häufig das Problem, daß Gegenstände z. B. ozeanographische Sonden oder Bojen vom Inneren des Schiffes auch während der Fahrt ins Wasser abgeworfen werden müssen. Auch kann es unter Umständen erforderlich sein, während der Fahrt Gegenstände aus der Wasserfläche ins Schiffsinnere zu übernehmen.

Bei der bekannten, für ein Containerfrachtschiff typischen Anordnung ist jedoch ein Be- und Entladen der Lasten nur bei festgemachtem Schiff möglich. Würden derartige Vorgänge bei Fahrt des Schiffes erfolgen, so bestünde die Gefahr, daß größere Wassermengen durch die Öffnung im Querdeck in das Schiffsinnere gelangen. Dies kann nur dadurch verhindert werden, daß die Öffnung im Fahrbetrieb des Schiffes durch den Rahmen des Aufzuges wasserdicht verschlossen ist.

Das Mehrrumpf-Wasserfahrzeug kann zusätzlich als Katamaran-Luftkissen-Wasserfahrzeug ausgebildet sein. Dieses umfaßt zwei sich in Fahrtrichtung erstreckenden, parallel zueinander mit Abstand angeordneten Schwimmern, deren Querschnitt sich von unten nach oben erweitert und welche oben durch eine Deckstruktur miteinander starr verbunden sind, vorn und achtern zwischen den Schwimmern angeordneten elastischen Schürzen, die sich bis mindestens annähernd zur Wasseroberfläche erstrecken und mit den Schwimmern einen Luftraum zwischen dem Boden der Deckstruktur und der Wasseroberfläche eingrenzen, Hauptantriebsaggregaten, welche im achteren Bereich der Schwimmer angeordnete Schubmittel antreiben, und Ventilatoren, die zum Anheben des Wasserfahrzeuges aus der Verdrängerfahrt in die Luftkissenfahrt von außen angesaugte Luft in den eingegrenzten Luftraum unterhalb des Bodens der Deckstruktur blasen.

Wird die aus der CH-A-489 388 bekannte Ausgestaltung bei einem derartigen Luftkissen-Wasserfahrzeug verwendet, so muß das Querdeck samt Öffnung zum Tunnel hin gasdicht abgedichtet sein, so daß die erzeugte Druckluft nicht ins Schiffsinnere oder durch alle Decks hindurch ins Freie gelangen kann. Ein Be- oder Entladevorgang eines gemäß der CH-A-489 388 ausgestatteten Mehrrumpf-Luftkissen-Wasserfahrzeuges bei gleichzeitig laufenden Ventilatoren für das Luftkissen ist somit nicht möglich.

Das Ziel der vorliegenden Erfindung besteht darin, ein Mehrrumpf-Wasserfahrzeug der eingangs genannten Gattung zu schaffen, bei dem Gegenstände problemlos und von außen weitgehend unsichtbar auch während der Fahrt des Mehrrumpf-Wasserfahrzeuges ins Wasser abgeworfen oder ggf. auch aus dem Wasser herausgenommen werden können.

Diese Aufgabe wird erfindungsgemäß durch die kennzeichnenden Merkmale des Anspruches 1 gelöst.

Der Erfindungsgedanke ist also darin zu sehen, daß man zwischen den Schwimmern im untersten Deck eine verschließbare Öffnung vorsieht, welche in den Luftraum oberhalb der Wasserfläche zwischen den Schwimmern mündet und zum Schiffsinneren hin durch einen luftdichten Raum abgegrenzt ist.

Ohne Einsichtnahme von außen und weitgehend ungehindert durch zu starke Bewegungen der Wasseroberfläche und durch Witterungsunbilden können so Gegenstände in vertikaler Richtung aus dem Schiffskörper ins Wasser oder umgekehrt befördert werden. Durch den oberhalb der Öffnung vorgesehenen, luftdichten, unten offenen Raum, dessen unterer Rand rundum dicht mit den die Öffnung umgebenden Randbereichen des Querdecks verbunden ist, ist sichergestellt, daß auch bei hohem Seegang und/oder Wellenbewegungen während der Fahrt kein Wasser ins übrige Schiffsinnere außerhalb des luftdichten Raumes gelangen kann, wenn die die Öffnung verschließende Plattenanordnung geöffnet ist.

Diese Ausgestaltung hat ferner den Vorteil, daß auch bei einem Mehrrumpf-Luftkissen-Wasserfahrzeug der Betrieb der Ventilatoren und somit Fahrt des Wasserfahrzeuges bei geöffneter Plattenanordnung möglich ist, da der die Öffnung luftdicht umgebende Raum ein Entweichen von Druckluft ins übrige Schiffsinnere oder dadurch ins Freie verhindert. Mit anderen Worten wird in vorteilhafter Weise der die abzuwerfenden oder aufzunehmenden Gegenstände enthaltende, luftdicht abgeschlossene Raum in den Luftkissendruckraum unterhalb des Fahrzeugs einbezogen, so daß auch während des Luftkissenbetriebs des Fahrzeugs, also nicht nur in Verdrängerfahrt, die Plattenanordnung geöffnet und Gegenstände ins Wasser geworfen oder von dort aufgenommen werden können.

Sofern es sich nach einer bevorzugten Ausführungsform um ein Mehrrumpf-Luftkissen-Wasserfahrzeug handelt, soll erfindungsgemäß vorgesehen sein, daß die Öffnung durch eine Plattenanordnung wasser- und gasdicht verschließbar ist. Bei geschlossener Plattenanordnung sind dann die Bedingungen für den Luftkissenbetrieb genauso, wie wenn keine Öffnung zum Abwerfen und Aufnehmen von Gegenständen im unteren Querdeck vorhanden ist.

Um einen ausreichenden Freiraum zur Verfügung zu haben, soll die Öffnung insbesondere rechteckig sein. Ihr bevorzugter Querschnitt beträgt etwa 3 bis 7 m x 2 bis 3 m.

Besonders bevorzugt wird die Erfindung bei einem Luftkissenfahrzeug angewendet, wie es in der gleichzeitig eingereichten Patentanmeldung mit dem Titel "Katamaran-Wasserfahrzeug" der gleichen Anmelderin beschrieben ist. Hier sind die beiden Schwimmer oben durch Fachwerkträger fest verbunden, an denen die Einbauten des Schiffes enthaltende Einheitscontainer und Gangelemente aufgehängt sind. Bei einem derartigen Katamaran-Luftkissenwasserfahrzeug ist es bevorzugt, wenn die Abmessungen der Öffnung dem Horizontalquerschnitt eines einen offenen Boden aufweisenden Containers entsprechen, welcher oberhalb der Öffnung in vertikaler Ausrichtung mit dieser angeordnet ist und den luftdichten Raum enthält. Die gesamte Verbindungsstruktur liegt oberhalb der Schwimmer.

Um die die abwerfbaren Gegenstände enthaltenden Container problemlos auswechseln zu können, sieht eine weitere Ausführungsform der Erfindung vor, daß der Container am unteren Rand über lösbare Dichtungsmittel mit zur Verbindungsstruktur gehörenden Tragteilen verbunden ist.

Eine praktische Ausführungsform der Erfindung kennzeichnet sich dadurch, daß die Dichtungsmittel aus einem rundum den unteren Rand des Containers umgebenden aufblasbaren Dichtungsschlauch bestehen, der in einer die Öffnung umgebenden Umfangsnut des Tragteils angeordnet ist und im aufgeblasenen Zustand rundum an einer äußeren Umfangs-Dichtungsfläche des unteren Randes des Containers dichtend anliegt.

Durch Lösen der Dichtungsmittel und der Befestigung der Container an den Lagerböcken können diese leicht aus dem Schiffskörper entfernt und durch einen anderen entsprechend ausgebildeten Container mit darin aufgehängten abwerfbaren Gegenständen ersetzt werden.

Bevorzugt ist es weiter, wenn der Container vorzugsweise vorn und achtern über insbesondere schockgedämpfte Lagerböcke an der Verbindungsstruktur gehalten ist. Außer den Dichtungsmitteln sind also auch noch besondere Befestigungsmittel vorzusehen, welche bevorzugt so ausgebildet sind wie in der erwähnten Parallelanmeldung vom gleichen Tage.

Eine besonders vorteilhafte bauliche Ausführungsform kennzeichnet sich dadurch, daß die Plattenanordnungs aus zwei vorzugsweise um in Längsrichtung des Schiffes weisende Schwenkachse nach unten schwenkbaren Klappen besteht. Aufgrund dieser Ausbildung ist der Luft- und gegebenenfalls Wasserwiderstand der ausgeschwenkten Klappen vernachlässigbar, so daß die Fahrtüchtigkeit des Wasserfahrzeugs bei ausgeschwenkten Klappen nicht beeinträchtigt wird.

Da der Raum wegen des darin befindlichen Druckes und wegen der durchgehenden Öffnung am Boden von außen normalerweise nicht betreten werden kann, sieht eine weitere Ausführungsform der Erfindung vor, daß in dem Raum vorzugsweise durch eine außerhalb des Raumes angeordnete Steuervorrichtung auslösbare Aufhängevorrichtungen für durch die Öffnung abwerfbare Gegenstände vorgesehen sind.

Die schon vor der Montage des Containers im Schiff eingebrachten, abzuwerfenden Gegenstände können somit problemlos von außerhalb des Raumes her von den Aufhängevorrichtungen gelöst werden, nachdem die die Öffnung verschließenden Klappen aufgefahren wurden.

Vorteilhafterweise ist nur eine Öffnung im achteren Drittel des Schiffes angeordnet, wo die Wasseroberfläche zwischen den Schwimmern im allgemeinen bereits sehr beruhigt ist. Außerdem soll die Öffnung bei einem Katamaran in der Schiffsmitte angeordnet sein.

Besonders bevorzugt ist es, wenn die Schwimmer oberhalb der Verdrängungswasserlinie noch eine ausreichende Höhe besitzen, derart, daß die Schwenkklappen in nach unten ausgeklapptem Zustand noch einen deutlichen Abstand von z.B. 2 m von der Wasseroberfläche aufweisen. Die ausgeschwenkten Klappen sollen also auch bei Verdrängerfahrt nur in Ausnahmefällen, d.h. bei sehr starkem Seegang, sonst aber nicht mit der Wasseroberfläche in Berührung kommen.

Die Erfindung wird im folgenden beispielsweise anhand der Zeichnung beschrieben; in dieser zeigt:

Fig. 1    einen schematischen Querschnitt eines erfindungsgemäßen, mit zwei Schwimmern bzw. Rümpfen ausgerüsteten Mehrrumpf-Wasserfahrzeuges und

Fig. 2    den Ausschnitt II von Fig. 1 in vergrößertem Maßstab.

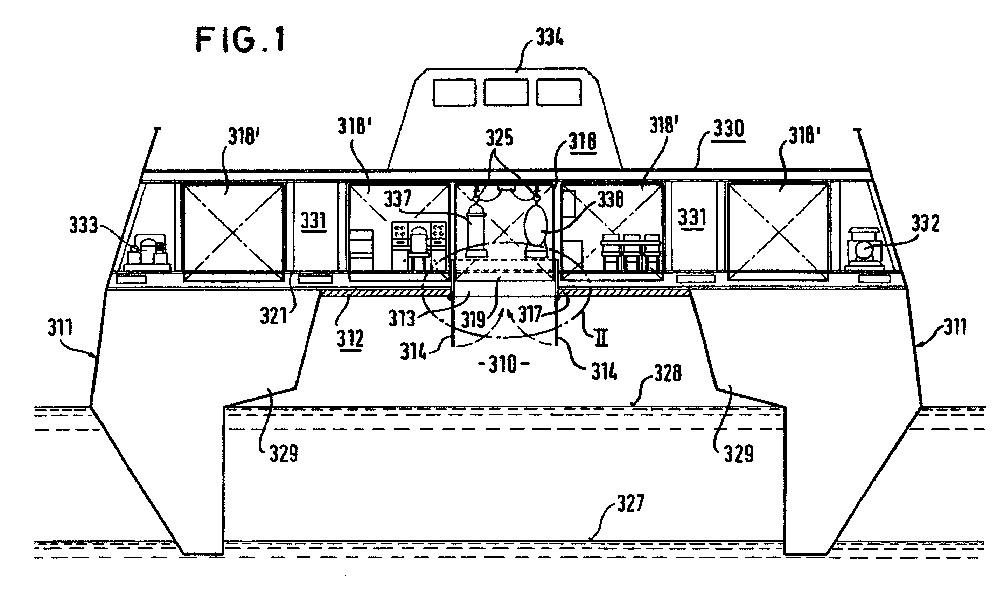

Nach Fig. 1 besitzt das erfindungsgemäße, vorn und achtern nicht dargestellte Luftkissenabdichtungsschürzen aufweisende Katamaran-Luftkissenfahrzeug zwei parallel zueinander verlaufende Schwimmer 311, welche bei Luftkissenbetrieb die nahe dem unteren Ende der Schwimmer 311 liegende Luftkissen-Schwimmwasserlinie 327 aufweisen und im Verdrängerbetrieb bis zur Verdränger-Wasserlinie 328 in die Wasseroberfläche eintauchen. Im Bereich der Verdränger-Wasserlinie 328 weisen die Schwimmer einen nach innen gerichteten Vorsprung 329 auf, so daß sie etwa in der oberen Hälfte annähernd doppelt so breit sind wie darunter.

Der Luftkissenraum 310 wird also durch die Schwimmer 311, die dazwischen sich erstreckenden, nicht dargestellten Schürzen, das Querdeck 312 und die Wasserlinien 327 bzw. 328 eingegrenzt.

Die Schwimmer 311 sind in bestimmten Längsabständen durch eine Verbindungsstruktor bildende Querfachwerkträger 330 fest miteinander verbunden, zwischen denen Einheitscontainer 318' befestigt sind. Die Querfachwerkträger 330 liegen mit ihrer Unterseite auf der Oberseite der Schwimmer 311 auf und sind insbesondere mit den Querschotten der Schwimmer fest verbunden. Außerdem erstrecken sich in und zwischen den Querfachwerkträgern 330 horizontale Verkehrswege darstellende Gangelemente 331, die in Fig. 1 nur schematisch angedeutet sind.

Innerhalb der Container 318' befinden sich die üblichen Einbauten eines Schiffes einschließlich der Mannschaftsräume. In den seitlichen Bereichen neben den oberhalb der Schwimmer 311 angeordneten Einheitscontainer 318' können Hilfsmaschinen 332 oder sonstige Aggregate 333 untergebracht sein. Die Hauptantriebsaggregate befinden sich im oberen Breitenbereich der Schwimmer 311. Oben auf der durch die Querfachwerkträger 330 gebildeten Verbindungsstruktur ist ein Brückenmodul 334 angebracht.

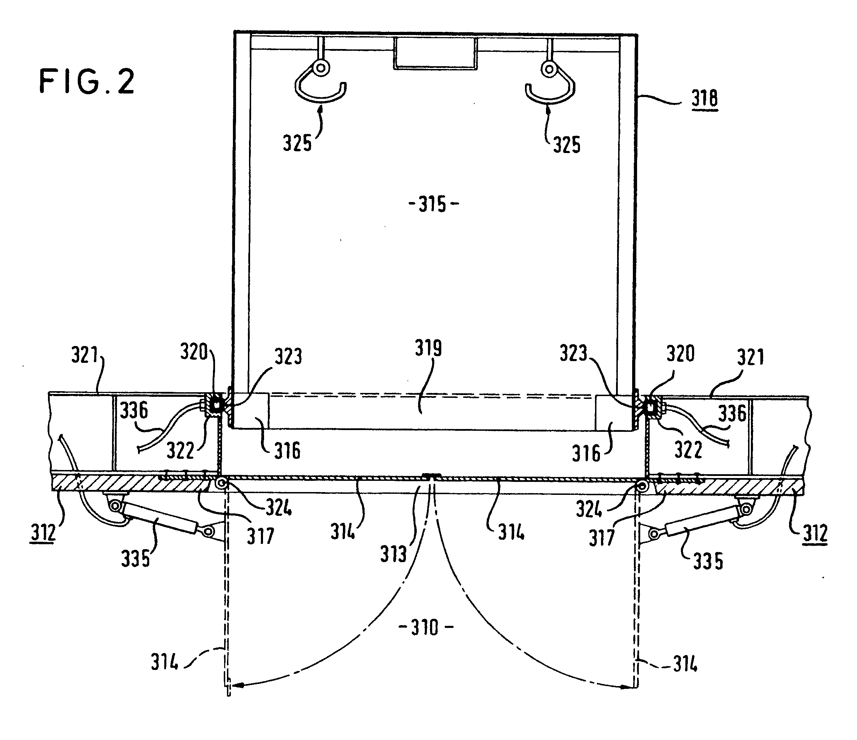

Nach den Fig. 1 und 2 befindet sich im achteren Drittel der Verbindungsstruktur zwischen zwei aufeinanderfolgende Querfachwerkträgern 330 eine rechteckige Öffnung 313 in dem Querdeck 312, welches die durch die Querfachwerkträger 330 gebildete Verbindungsstruktur nach unten wasser- und luftdicht abschließt. Zu beiden Seiten der Öffnung 313 befinden sich in Längsrichtung des Schiffes weisende Schwenkachsen 324, an denen als Plattenanordnung Schwenkklappen 314 angeordnet sind, die durch am Querdeck 312 abgestütze Hydraulikzylinder 335 wahlweise in die in Fig. 2 in ausgezogenen Linien dargestellte abgedichtete Schließposition oder in die in Fig. 2 gestrichelt und in Fig. 1 ausgezogen dargestellte Öffungsposition nach unten verschwenkbar sind, in der sie senkrecht nach unten vom Querdeck 312 wegstehen.

Rund um die Öffnung 313 sind an den Querfachwerkträgern 330 angeordnete Tragteile 321 vorgesehen, unterhalb von denen das Querdeck 312 angeordnet ist. Die Tragteile 321 umgeben die rechteckige Öffnung 313.

Am Innenumfang der Tragteile 321 ist eine Umfangsnut 322 vorgesehen, in der sich rundum ein aufblasbarer Dichtungsschlauch 320 befindet, der über pneumatische oder hydraulische Leitungen 336 und nicht dargestellte Ventile an eine Druckquelle angelegt ist.

Oberhalb der Öffnung 313 ist innerhalb des durch den ringförmigen Dichtungsschlauch 320 definierten Raumes der untere Rand 316 eines Einheitscontainers 318 angeordnet, der sich von den übrigen Containern 318' dadurch unterscheidet, daß sein Boden 319 offen ist. Rundum ist der untere Rand 316 mit Umfangs-Dichtungsgegenflächen 323 versehen, die im eingebauten Zustand des Containers 318 horizontal gegenüber dem ringförmigen Dichtungsschlauch 320 zu liegen kommen.

In der dargestellten eingebauten Lage des Containers 318 ist dessen Innenraum 315 druckdicht gegenüber den übrigen Teilen der Verbindungsstruktur abgedichtet. Der Raum 315 ist druckmäßig mit dem Luftkissenraum 310 zwischen den Schwimmern 311 und unterhalb des Querdecks 312 verbunden.

Die Schwenkachsen 324 der Schwenkklappen 314 sind an den Randbereichen 317 des Querdecks 312 befestigt, welche die rechteckige Öffnung 313 umgeben.

Innerhalb des Containers 318 sind vorzugsweise in seinem Deckenbereich Aufhängevorrichtungen 325 vorgesehen, an denen Gegenstände, z.B. Meßbojen 337 oder Meßsonden 338 aufgehängt sind.

Die Aufhängevorrichtungen 325 sind von außerhalb des Containers 318 her fernbedienbar, derart, daß sich die Gegenstände 337, 338 von ihnen lösen und durch die freigelegte Öffnung 313 an den ausgeschwenkten Schwenkklappen 314 vorbei ins Wasser fallen können.

Im Bedarfsfall könnten innerhalb des Containers 318 auch Hubvorrichtungen vorgesehen sein, mit denen empfindlichere Gegenstände langsam durch die Öffnung 313 hindurch ins Wasser abgelassen oder gegebenenfalls auch aus dem Wasser aufgenommen werden .

**Patentansprüche**

1. Mehrrumpf-Wasserfahrzeug mit mindestens zwei sich in Fahrtrichtung erstreckenden, parallel zueinander mit Abstand angeordneten Schwimmern, welche oben durch eine Verbindungsstruktur miteinander verbunden sind, die Einbauten trägt und unten ein oberhalb der Wasserlinie gelegenes Querdeck aufweist, in dem wenigstens eine durch eine bewegliche Plattenanordnung wasserdicht verschließbare Öffnung vorgesehen ist,
dadurch **gekennzeichnet,**
daß oberhalb der Öffnung (313) ein luftdichter, unten offener Raum (315) vorgesehen ist, dessen unterer Rand (316) rundum dicht mit den die Öffnung (313) umgebenden Randbereichen (317) des Querdecks (312) verbunden ist.

2. Wasserfahrzeug nach Anspruch 1,
dadurch **gekennzeichnet,**
daß die Öffnung (313) durch die bewegliche Plattenanordnung (314) wasser- und gasdicht verschließbar ist.

3. Wasserfahrzeug nach einem der vorhergehenden Ansprüche,
dadurch **gekennzeichnet,**
daß die Öffnung (313) rechteckig ist.

4. Wasserfahrzeug nach Anspruch 3,
dadurch **gekennzeichnet,**
daß die Öffnung (313) einen Querschnitt von etwa 5 bis 7 m x 2 bis 3 m aufweist.

5. Wasserfahrzeug nach Anspruch 3 oder 4,
dadurch **gekennzeichnet,**
daß die Abmessungen der Öffnung (313) dem Horizontalquerschnitt eines einen offenen Boden (319) aufweisenden Containers (318) entsprechen, welcher oberhalb der Öffnung (313) in vertikaler Ausrichtung mit dieser angeordnet ist und den luftdichten Raum (315) enthält.

6. Wasserfahrzeug nach Anspruch 5,
dadurch **gekennzeichnet,**
daß der Container (318) am unteren Rand (316) über lösbare Dichtungsmittel (320) mit zur Verbindungsstruktur gehörenden Tragteilen (321) verbunden ist.

7. Wasserfahrzeug nach Anspruch 6,
dadurch **gekennzeichnet,**
daß die Dichtungsmittel aus einem rundum den unteren Rand (316) des Containers (318) umgebenden aufblasbaren Dichtungsschlauch (320) bestehen, der in einer die Öffnung (313) umgebenden Umfangsnut (322) des Tragteils (321) angeordnet ist und im aufgeblasenen Zustand rundum an einer äußeren Umfangs-Dichtungsgegenfläche (323) des unteren Randes (316) des Containers (318) dichtend anliegt.

8. Wasserfahrzeug nach Anspruch 6 oder 7,
dadurch **gekennzeichnet,**
daß der Container (318) vorn und achtern über insbesondere schockgedämpfte Lagerböcke an der Verbindungsstruktur gehalten ist.

9. Wasserfahrzeug nach einem der vorhergehenden Ansprüche,
dadurch **gekennzeichnet,**
daß die Plattenanordnung aus zwei um in Längsrichtung des Schiffes weisende Schwenkachsen (324) schwenkbaren Schwenkklappen (314) besteht.

10. Wasserfahrzeug nach einem der vorhergehenden Ansprüche,
dadurch **gekennzeichnet,**
daß in dem Raum (315) durch eine außerhalb des Raumes (315) angeordnete Steuervorrichtung auslösbare Aufhängevorrichtungen (325) für durch die Öffnung (313) abwerfbare Gegenstände (337, 338) vorgesehen sind.

11. Wasserfahrzeug nach einem der vorhergehenden Ansprüche,
dadurch **gekennzeichnet,**
daß eine Öffnung (313) im achteren Drittel des Schiffes angeordnet ist.

12. Wasserfahrzeug nach einem der vorhergehenden Ansprüche,
dadurch **gekennzeichnet,**
daß eine Öffnung bei einem Katamaran in der Schiffsmitte angeordnet ist.

13. Wasserfahrzeug nach einem der Ansprüche 9 bis 12,
dadurch **gekennzeichnet,**
daß die Schwenkklappen (314) im ausgeklappten Zustand noch einen deutlichen Abstand von der Wasseroberfläche aufweisen.

14. Wasserfahrzeug nach einem der Ansprüche 9 bis 13,
dadurch **gekennzeichnet,**
daß die Schwenkachsen (324) an der Backbord- bzw. Steuerbordseite der Öffnung (313) vorgesehen sind.

15. Wasserfahrzeug nach einem der Ansprüche 9 bis 14,
dadurch **gekennzeichnet,**
daß beide Schwenkklappen (314) gleich groß sind und sie im geschlossenen Zustand in der Mitte der Öffnung (313) dicht aneinanderliegen.

**Claims**

1. A multiple-hulled marine craft having at least two floats which extend in the direction of travel, which are arranged spaced apart and parallel to one another, and which are connected together at the top by a connection structure which carries built-in structures and which has, at the bottom, a transverse deck disposed above the waterline, at least one closable opening being provided in the transverse deck and being closable in water-tight manner by a plate arrangement, characterized in that an air-tight chamber (315) which is open at the bottom is provided above the opening (313), with the lower edge (316) of the chamber being connected all around the opening in sealed manner with the marginal regions (317) of the transverse deck (312) surrounding the opening (313).

2. A marine craft in accordance with claim 1, characterized in that the opening (313) is closable in water and gas-tight manner by the movable plate arrangement (314).

3. A marine craft in accordance with one of the preceding claims, characterized in that the opening (313) is rectangular.

4. A marine craft in accordance with claim 3, characterized in that the opening (313) has a cross-section of approximately 5 to 7 m by 2 to 3 m.

5. A marine craft in accordance with claim 3 or claim 4, characterized in that the dimensions of the opening (313) correspond to the horizontal cross-section of a container (318) having an open base (319) which is arranged above the container (313) in vertical alignment and contains the air-tight chamber (315).

6. A marine craft in accordance with claim 5, characterized in that the container (318) is connected at the lower edge (316) via releasable sealing means (320) with support parts (321) which belong to the connection structure.

7. A marine craft in accordance with claim 6, characterized in that the sealing means comprise an inflatable sealing hose (320) which extends all around and surrounds the lower edge (316) of the container (318), is arranged in a peripheral groove (322) of the support part (321) surrounding the opening, and, in the inflated state, sealingly contacts all around an outer peripheral sealing counterflange (323) of the lower edge (316) of the container (318).

8. A marine craft in accordance with claim 6 or claim 7, characterized in that the container (318) is preferably held at the front and the rear on the connection structure via bearing blocks which are in particular shock damped.

9. A marine craft in accordance with one of the preceding claims, characterized in that the plate arrangement consists of two flaps (314) which are pivotable about·pivot axes (324) pointing in the longitudinal direction of the ship.

10. A marine craft in accordance with one of the preceding claims, characterized in that suspension devices (325), which are releasable by a control device arranged outside of the chamber (315), are provided in the chamber (315) for articles (326) which can be dropped through the opening (313).

11. A marine craft in accordance with one of the preceding claims, characterized in that an opening (313) is arranged in the sternmost third of the ship.

12. A marine craft in accordance with one of the preceding claims, characterized in that in a catamaran the opening is arranged at the centre of the ship.

13. A marine craft in accordance with one of the claims 9 to 12, characterized in that the pivotable flaps still have a substantial distance from the water surface in the outwardly pivoted state.

14. A marine craft in accordance with one of the claims 9 to 13, characterized in that the pivot axes (324) are provided on the port and starboard sides of the opening (313) respectively.

15. A marine craft in accordance with one of the claims 9 to 14, characterized in that both flaps (314) are of the same size and sealingly contact one another at the centre of the opening (313) in the closed state.

**Revendications**

1. Véhicule marin multicoque comprenant au moins deux flotteurs s'étendant dans la direction de déplacement, parallèles l'un à l'autre et écartés l'un de l'autre, lesdits flotteurs étant mutuellement reliés par le haut au moyen d'une structure de liaison qui comprend des équipements, et comprenant en bas au dessus de la ligne de flottaison un pont transversal dans lequel est ménagée au moins une ouverture qui peut être fermée de manière étanche à l'eau par un tableau mobile, caractérisé en ce qu'un compartiment (315) étanche à l'air et ouvert par le bas est prévu au dessus de l'ouverture (313), la bordure inférieure (316) dudit compartiment étant reliée de manière étanche sur tout son pourtour avec les zones marginales (317) du pont transversal (312) entourant l'ouverture (313).

2. Véhicule marin selon la revendication 1, caractérisé en ce que l'ouverture (313) peut être fermée de manière étanche à l'air et à l'eau par le tableau mobile (314).

3. Véhicule marin selon l'une des revendications précédentes, caractérisé en ce que l'ouverture (313) est rectangulaire.

4. Véhicule marin selon la revendication 3, caractérisé en ce que l'ouverture (313) a une section d'environ 5 à 7 m par 2 à 3 m.

5. Véhicule marin selon l'une des revendications 3 ou 4, caractérisé en ce que les dimensions de l'ouverture (313) correspondent à la section horizontale d'un conteneur (318) doté d'un fond ouvert (319), ledit conteneur étant disposé verticalement aligné au dessus de l'ouverture (313) et contenant ledit compartiment (315) étanche à l'air.

6. Véhicule marin selon la revendication 5, caractérisé en ce que le conteneur (318) est relié à sa bordure inférieure (316) avec des pièces porteuses (321) de la structure de liaison par l'intermédiaire d'organes d'étanchéité (320) détachables.

7. Véhicule marin selon la revendication 6, caractérisé en ce que les organes d'étanchéité comprennent un boyau gonflable (320) entourant tout le pourtour de la bordure inférieure (316) du conteneur (318), ledit boyau étant disposé dans une gorge périphérique (322) des pièces porteuses (321) qui entoure l'ouverture (313), et le boyau en condition gonflée engageant de manière étanche une contre-surface d'étanchéité extérieure (323) de la bordure inférieure (316) du conteneur (318).

8. Véhicule marin selon l'une des revendications 6 ou 7, caractérisé en ce que le conteneur (318) est maintenu sur la structure de liaison côté proue et côté poupe par des pattes d'appui, notamment à amortisseur de chocs.

9. Véhicule marin selon l'une des revendications précédentes, caractérisé en ce que le tableau comprend deux volets (314) pivotants susceptibles de pivoter autour de deux axes de pivotement (324) dirigés suivant la dirction longitudinale du bateau.

10. Véhicule marin selon l'une des revendications précédentes, caractérisé en ce que des dispositifs de suspension (325) sont prévus à l'intérieur du compartiment (315) pour des objets (337, 338) susceptibles d'être lâchés par l'ouverture (313), lesdits dispositifs étant libérables au moyen d'un dispositif de commande extérieur au compartiment (315).

11. Véhicule marin selon l'une des revendications précédentes, caractérisé en ce qu'une ouverture (313) est disposée dans le tiers du bateau côté poupe.

12. Véhicule marin selon l'une des revendications précédentes, caractérisé en ce que, s'agissant d'un catamaran, une ouverture est disposée au milieu du bateau.

13. Véhicule marin selon l'une des revendications 9 à 12, caractérisé en ce que les volets pivotants (314) sont, en condition pivotée vers l'extérieur, disposés à une distance encore appréciable de la surface de l'eau.

14. Véhicule marin selon l'une des revendications 9 à 13, caractérisé en ce que les axes de pivotement (324) sont prévus respectivement côté bâbord et côté tribord de l'ouverture (313).

15. Véhicule marin selon l'une des revendications 9 à 14, caractérisé en ce que les deux volets pivotants (314) sont de même taille et sont, en condition fermée, en contact mutuel étanche au milieu de l'ouverture (313).

FIG.1

FIG.2

EP 0 201 913 B1